**Europäisches Patentamt**

**European Patent Office**

**Office européen des brevets**

(19)

(11) Veröffentlichungsnummer: **0 131 701**
**A1**

(12) **EUROPÄISCHE PATENTANMELDUNG**

(21) Anmeldenummer: **84105059.4**

(22) Anmeldetag: **04.05.84**

(51) Int. Cl.⁴: **A 23 L 1/216**
**A 23 L 1/18**

(30) Priorität: **13.07.83 DE 3325293**

(43) Veröffentlichungstag der Anmeldung:
**23.01.85 Patentblatt 85/4**

(84) Benannte Vertragsstaaten:
**AT BE CH DE FR GB IT LI LU NL SE**

(71) Anmelder: **bio producta Dr. Rapp GmbH**
**Alemannenstrasse 5**
**D-7768 Stockach(DE)**

(72) Erfinder: **Rapp, Rudolf, Dr.**
**Goldbacherstrasse 42**
**D-7770 Überlingen(DE)**

(74) Vertreter: **Kern, Wolfgang Dipl.-Ing. et al,**
**Patentanwälte Tischer, Kern & Brehm**
**Albert-Rosshaupter-Strasse 65**
**D-8000 München 70(DE)**

(54) **Genussfertiges Kartoffelstäbchen.**

(57) Ein genußfertiges Kartoffelstäbchen besteht aus zu einer Mischung bereiteter roher und/oder gegarter, entwässerter Kartoffelmasse mit einem wesentlichen Zuschlag von Ballaststoffen, die miteinander unter Druck und Wärmeeinwirkung verbacken, stäbchenstrangförmig extrudiert und auf Länge geschnitten sind, wobei zur Geschmacksbeeinflussung Würzmittel zugesetzt werden könner. Die vollkommen fettfreien Kartoffelstäbchen werden ohne Quellvorgang aus der trockenen Mischung der Zutaten in einem Extruder gegart oder gebacken und liegen nach Zerschneiden des aus dem Extrudermundstück austretenden Strangs verpackungs- und genußfertig vor. Bei der Lagerhaltung ist keine Kühlung des Produkts erforderlich.

EP 0 131 701 A1

PATENTANWÄLTE

# TISCHER · KERN & BREHM

Albert-Rosshaupter-Strasse 65   D 8000 München 70   Telefon (089) 7605520   Telex 05-212284 patsd   Telegramme Kernpatent München

Bio-8323/EUR

bio producta

Dr. Rapp GmbH

7768 Stockach

## Genußfertiges Kartoffelstäbchen

Die Erfindung betrifft ein genußfertiges Kartoffelstäbchen, bestehend aus roher und/gegarter, entwässerter Kartoffelmasse mit einem Zuschlag von Balaststoffen, die in einem Extruder vermengt und verkocht und nach dem Austreten aus dem Extruder in Stücke zerkleinert werden.

Genußfertige Kartoffelstäbchen, im allgemeinen Pommes Frites genannt, werden üblicherweise durch Frittieren hergestellt und haben deshalb einen hohen Fettgehalt. Sie sind dadurch sehr kalorienhaltig und wegen der Zusammensetzung des verwendeten Fettes und der Fettsäuren nicht immer bekömmlich. Darüber hinaus ist ihre Haltbarkeit nur begrenzt und erfordert grundsätzlich eine kühle Lagerung, wodurch für Hersteller und Handel beträgliche Kosten entstehen, die das Produkt verteuern.

Andererseits eignen sich Kartoffelstäbchen wegen ihres Geschmackes sehr gut als Beilage zu vielerlei Gerichten und auch als Knabberartikel für Zwischenmahlzeiten auf Reisen.

Aus der DE-OS 26 37 820 sind Lebensmittelprodukte in Form von Knabberwaren bekannt, die aus einem vornehmlich auf Kartoffelpulverbasis bereiteten, gequollenen Brei in einem Extruder vermengt und verbacken und nach Austritt aus dem Extrudermundstück in einem Preßvorgang verdichtet werden, so daß waffel-, plättchen- oder streifenartige Stücke vorliegen. Diese Knabberartikel sind aber schon deshalb mit den herkömmlichen Kartoffelstäbchen nicht vergleichbar, weil sie wegen der durch das Pressen entstandenen Verdichtung ein viel zu geringes Saugvermögen haben.

Es wurde überdies neuerdings festgestellt, daß es für den Menschen ernährungspsychologisch wesentlich ist, mit seinen Speisen neben den im Nährwert vielfach sehr hochkonzentrierten Speiseanteilen wie Fleisch, Fisch, Fett und dergleichen, möglichst viel nichtverdaubare Ballaststoffe aufzunehmen, um beispielsweise Darmträgheit und Opstipation zu vermeiden.

Die Aufgabe der Erfindung besteht deshalb darin, ein schmackhaftes Kartoffelstäbchen mit möglichst hohem Ballaststoffanteil zu schaffen, das nicht nur einen geringeren Herstellungsaufwand erfordert, sondern auch ohne besondere Kühlung wesentlich länger haltbar ist, und auch ohne Frittieren sich wie die üblichen Pommes Frites sehr gut als Beilage eignet, ohne deren aus dem relativ hohen Fettgehalt herrührenden Nachteile zu besitzen. Zur Herstellung des genußfertigen Kartoffelstäbchens der erfindungsgemäßen Art soll ein vergleichsweise geringer Aufwand bezüglich der Herstellungsanlagen und der Energiekosten erforderlich sein. Darüber hinaus soll das Herstellungsverfahren die verwendeten Ausgangssubstanzen schonend behandeln.

Diese Aufgabe wird erfindungsgemäß dadurch gelöst, daß die Vermischung sämtlicher Bestandteile des Extrudates vor Eingabe in den Extruder in trockenem Zustand, also ohne Zugabe von zusätzlichem Wasser oder anderen Flüssigkeiten, erfolgt und das Gemisch im Extruder bei Temperaturen zwischen 80 und 120°C und Drücken zwischen 50 und 300 bar im rohstoffeigenen Wasser gekocht wird und das plastische Extrudat durch Strangformung im Mundstück des Extruders ohne Nachbehandlung durch Trocknung unmittelbar zerkleinert wird.

Vorteilhafte Ausgestaltungen, die wegen hoher Ballaststoffanteile zu besonders kalorienarmen oder auch für Diabetispatienten geeigneten Kartoffelstäbchen führen oder die geschmackliche Besonderheiten aufweisen, sind in den Unteransprüchen gekennzeichnet. So ist durch Untersuchungen heute gesichert, daß bei Aufnahme von reichlich Ballaststoffen die Krankheitsbilder Opstipation, irretables Colon oder Colon-Divertigulose positiv beeinflußt werden. Bei Kleiezugabe zur Speise von 20 bis 40 g täglich, was leicht mit Hilfe des erfindungsgemäßen Kartoffelstäbchens in schmackhafter Weise erfolgen kann, da dies bei üblicher Rezeptur ca. 100 g des Fertigproduktes entspricht, wird eine Normalisierung der Darmfunktion und Beschwerdefreiheit von oben aufgeführten Krankheitsbildern erzielt. Durch erhöhte Ballaststoffaufnahme sind auch Diabetis mellitus und Hyperlipidämie behandelbar.

Schmackhafte Kartoffelstäbchen mit den der Erfindung zugrundeliegenden Zielen für die Gesundheit erreichenden Eigenschaften werden bei folgenden Rezepturen der Ausgangsstoffe erhalten, wobei die Substanzmengenanteile im Gemisch in der Reihenfolge der aufgeführten Substanzen jeweils abnehmen:

1. Reis, Weizen, Kartoffelpulver, Sojakleie, Salz;

2. Reis, Weizen, Kartoffelpulver, Weizenkleie, Tomatenketchup, Würzaroma;

3. Weizen, Kartoffelpulver, Sojakleie, Eiweiß, Salz, Würzaroma.

Anstelle von Weizen oder in Verbindung mit Weizen lassen sich auch andere Vollkorngetreide wie Roggen, Hafer, Gerste, Mais, verwenden.

Während bei dem nach der genannten DE-OS 26 37 820 hergestellten Produkt die einzelnen Produktanteile miteinander vermischt nach Wasserzugabe während einiger Zeit gequollen werden, was Zeit und Raum beansprucht sowie Energie, da das Wasser größtenteils später wieder entfernt werden muß, erfolgt bei der Herstellung der erfindungsgemäßen Kartoffelstäbchen die Vermischung sämtlicher Ausgangsmaterialien der jeweiligen Rezeptur im trockenen Zustand, also ohne jegliche Anteigung durch Wasserzusatz oder Milchzustand. Die so erhaltene Mischung wird direkt in den temperaturregulierbaren und druckbeständigen Extruder eingegeben, in dem die Mischungsbestandteile besonders intensiv durch die darin auftretende Knetung und Scherung vermischt werden. Hierbei ist jedoch die Zudosierung weiterer Rezepturbestandteile oder besonders empfindlicher Bestandteile auch an jeder beliebigen Stelle des Verfahrensprozesses zur Erzielung von bestimmten taktilen und organoleptischen Effekten im Extruder möglich. Aufgrund der der Mischung auf diese Weise im Extruder zugeführten mechanischen Energie und wegen eines Druckaufbaus vor dem mit Formöffnungen ausgestatteten Mundstück des Extruders ergibt sich das gewünschte Aufkochen oder Garen der Mischung, wobei Extrudiertemperaturen von 80° bis 120°C und Drücke im Extruder zwischen 50 und 300 bar erreicht werden. Der Druck baut sich infolge der Verflüssigung der Masse, der Erwärmung derselben und des dabei entstehenden Dampfdruckes und der Drosselung am Düsenaustritt auf. Dazu reicht im allgemeinen das rohstoffeigene Wasser aus, weshalb die Bestandteile der Mischung ohne besondere Wasser- oder Flüssigkeitszugabe, wie oben erwähnt, im Extruder verarbeitet werden.

Es ist aber auch möglich, gewissermaßen als Gleitmittel für die Produktmasse im Extruder Wasser zuzuführen, welches dann im Expansionsvorgang nach Austritt des Kartoffelstäbchenstrangs aus dem Mundstück des Extruders verdampft, so daß das Endprodukt einen Wassergehalt von 5 bis 80 Gew.-% hat. Eine Nachbehandlung durch Trocknung ist nicht erforderlich, und die nach dem periodischen Zerschneiden des stranggeformten, plastischen Extrudats entweder direkt am Düsenaustritt oder nach einer kurzen Abkühlungsphase auf ca. 60 bis 70°C gewonnenen Kartoffelstäbchen stellen bereits das Fertigprodukt dar. Die so gewonnenen Kartoffelstäbchen können deshalb unmittelbar portionsweise abgepackt und gelagert werden, ohne daß letztere eine Kühlung erfordert. Farbe und Geschmack der Kartoffelstäbchen ergeben sich dabei außer durch die Rezeptur zusätzlich durch die Prozeßführung während des Extrudierens, d. h. durch Höhe und Dauer der im Extruder einwirkenden Temperaturen.

Die Kartoffelstäbchen haben eine gewünschte knusprige Struktur, die durch Variation, Abstimmung und Modifikation sowohl der Getreidesorten als auch der Ballaststoffe und der anderen Rezepturbestandteile sowie durch die Wassergehalte der Rohstoffe und, dadurch bedingt, auch die Temperatur- und Druckbedingungen im Extruder erzielt wird. Es werden keinerlei Treibmittel u. dgl. benötigt, da der in den Rohstoffen enthaltene Wassergehalt einerseits für die Aufblähung, also Strukturierung der extrudierten Kartoffelstäbchen sorgt und andererseits die Ballaststoffe in Verbindung mit den sonstigen Bestandteilen des Gemisches die erforderliche Bindung bewirken, ohne daß besondere Bindemittel notwendig werden.

Das aus dem Mundstück des Extruders austretende plastifizierte, stranggeformte Extrudat wird durch Freisetzung der inhärenten Feuchtigkeit in gewisser Weise aufgebläht und dadurch in ein poröses, luftiges, saugfähiges und gut verdauliches Kartoffelstäbchenprodukt verwandelt.

Wird angestrebt, den Ballaststoffanteil in den erfindungsgemäßen Kartoffelstäbchen besonders zu erhöhen, so läßt sich dies leicht durch Steigerung der Zumischung von beispielsweise Zellulose, Weizenkleie, Sojakleie oder geschrotetem Getreide erreichen.

Die obige Beschreibung macht die Besonderheit des genußfertigen Kartoffelstäbchens sowohl hinsichtlich seiner Zusammensetzung mit der damit verbundenen physiologischen Wirkung als auch die damit erzielten günstigen Bedingungen für Herstellungsverfahren, Transport und Lagerhaltung deutlich, so daß mit dem neu geschaffenen Kartoffelstäbchen den Erkenntnissen der Ernährungswissenschaft einerseits und zeit-, energie- und raumsparenden Herstellungsmethoden andererseits Rechnung getragen ist.

P a t e n t a n s p r ü c h e

1. Genußfertiges Kartoffelstäbchen, bestehend aus roher und/oder gegarter, entwässerter Kartoffelmasse mit einem Zuschlag von Ballaststoffen, die in einem Extruder vermengt oder verkocht und nach dem Austreten aus dem Extruder in Stücke zerkleinert werden, dadurch g e k e n n z e i c h n e t , daß die Vermischung sämtlicher Bestandteile des Extrudates in trockenem Zustand, also ohne Zusatz von Wasser oder anderen Flüssigkeiten, vor Eingabe in den Extruder erfolgt und dieses Gemisch im Extruder bei Temperaturen zwischen 80° und 120°C und Drücken zwischen 80 und 300 bar im rohstoffeigenen Wasser gekocht wird und das durch Strangformung im Mundstück des Extruders erhaltene plastische Extrudat ohne Nachbehandlung in Stäbchenstücke geschnitten und unmittelbar als Fertigprodukt erhalten wird.

2. Kartoffelstäbchen nach Anspruch 1, dadurch g e k e n n z e i c h n e t , daß das Gemisch der Ausgangsmaterialien vor dem Eintrag in den Extruder wenigstens die Bestandteile Reis, Vollkorngetreide, Kartoffelpulver, Sojakleie und Salz aufweist.

3. Kartoffelstäbchen nach Anspruch 1, dadurch g e k e n n z e i c h n e t , daß das Gemisch der Ausgangsmaterialien vor dem Eintrag in den Extruder wenigstens die Bestandteile Reis, Vollkorngetreide, Kartoffelpulver, Weizenkleie, Tomatenketchup und Würzaroma aufweist.

4. Kartoffelstäbchen nach Anspruch 1, dadurch g e k e n n z e i c h n e t , daß das Gemisch der Ausgangsmaterialien vor dem Eintrag in den Extruder wenigstens die Bestandteile Vollkorngetreide, Kartoffelpulver, Sojakleie, Eiweiß, Salz und Würzaroma aufweist.

5. Kartoffelstäbchen nach einem der Ansprüche 2 bis 4, dadurch gekennzeichnet, daß das Vollkorngetreide Weizen, Roggen, Hafer oder Gerste ist.

6. Kartoffelstäbchen nach einem der Ansprüche 2 bis 5, dadurch gekennzeichnet, daß die Substanzmengenanteile im Gemisch in der Reihenfolge der genannten Substanzen kleiner werden.

Europäisches
Patentamt

**EUROPÄISCHER RECHERCHENBERICHT**

EP 84 10 5059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE-A-2 637 820 (GENERAL MILLS INC.) <br> * Ansprüche 1, 4* <br><br> --- | | A 23 L 1/216 <br> A 23 L 1/18 |
| A | DE-A-2 125 702 (GENERAL MILLS INC.) <br> * Anspruch 1 * <br><br> --- | | |
| A | GB-A-1 147 584 (GENERAL MILLS INC.) <br> * ANsprüche 1, 5-7 * <br><br> --- | | |
| A | FR-A-2 091 489 (GENERAL MILLS INC.) <br> * Anspruch 1 * <br><br> ----- | | |

RECHERCHIERTE
SACHGEBIETE (Int. Cl. ³)

A 23 L 1/00

Der vorliegende Recherchenbericht wurde für alle Patentansprüche erstellt.

| Recherchenort <br> BERLIN | Abschlußdatum der Recherche <br> 21-09-1984 | Prüfer <br> SCHULTZE D |
|---|---|---|